# EUROPÄISCHE PATENTSCHRIFT

(11) **EP 0 589 317 B1**
(45) Veröffentlichungstag und Bekanntmachung des Hinweises auf die Patenterteilung: **11.06.1997**
(21) Anmeldenummer: 93114630.2
(22) Anmeldetag: 11.09.1993
(51) Int. Cl.: A01D 43/10, A01D 82/00

(54) **Erntemaschine**
Harvesting machine
Moissonneuse

(30) Priorität: 24.09.1992 DE 4231923
(43) Veröffentlichungstag der Anmeldung: 30.03.1994
(73) Patentinhaber: SAME S.p.A., I-24047 Treviglio (Bergamo) (IT)
(72) Erfinder: Gropp, Heiko, D-89428 Syrgenstein (DE); Leppat, Frank, D-89407 Dillingen (DE); Häfele, Martin, D-73486 Adelmannsfelden (DE)
(74) Vertreter: Nau, Walter, Dipl.-Ing.

(56) Entgegenhaltungen:
- CH-A- 377 138
- DE-A- 2 143 192
- US-A- 4 528 806

## Beschreibung

Die Erfindung betrifft eine Erntemaschine zur Grünfutteraufbereitung gemäß dem Oberbegriff des Patentanspruchs 1.

Aus der DE- 39 23 637 ist eine selbstfahrende Erntemaschine zur Grünfutteraufbereitung bekannt. Diese Erntemaschine weist im wesentlichen Schneid-, Förder- sowie Verarbeitungseinrichtungen für das Erntegut auf. Am Ende des eine Matte bildenden Verarbeitungsprozesses erfolgt die Ablage der Matte beispielsweise über ein Ablageband auf dem Feld.

Im Rahmen von Felderprobungen hat sich herausgestellt, daß aufgrund dieser Aufbereitung (u.a. Pressen des Grünfutters mit hohem Druck) die Matte die Eigenschaft aufweist, an einer Verarbeitseinrichtung oder an diesem Ablageband zu haften. So wird die Matte im ungünstigsten Fall von dem Ablageband weiter transportiert (beispielsweise auf der Unterseite), so daß es zu Beeinträchtigungen des Betriebes der Erntemaschine (Verstopfungen, fehlerhaftes Ablegen der Matte) kommt.

Aus der US-A-4 528 806 ist eine Aufbereitungseinrichtung bekannt, bei der auf einer Walze oder einem Zylinder Bürstenreihen parallel zueinander angeordnet sind. Die Aufbereitung des Erntegutes erfolgt derart, daß es durch einen Spalt geleitet wird und die den Spalt bildenden Bürsten eine unterschiedliche relative Geschwindigkeit zueinander haben. Diese Bürsten haben den Zweck, die Aufbereitung durch ein Auffräsen der Oberfläche des Erntegutes zu bewirken. Dabei kann es vorkommen, daß sich ein geringer Teil des Erntegutes zwischen den Bürsten ablagert, wobei der abgelagerte Teil mittels einer Einrichtung (Bezugsziffer 18 des amerikanischen Patentes) ausgetragen werden soll. Bei dieser Aufbereitungseinrichtung handelt es sich nicht um eine Preßeinrichtung, so daß sich nicht die Problematik stellt, daß das gepreßte Erntegut in Form einer Matte gleichmäßig und großflächig an einer Preßrolle, die es in diesem Dokument nicht gibt, haften bleibt.

Der Erfindung liegt die Aufgabe zugrunde, die Erntemaschine derart zu gestalten, daß am Ende des Verarbeitungsprozesses die Matte losgelöst von einer Verarbeitungseinrichtung abgelegt werden kann und ein Betrieb der Erntemaschine nicht beeinträchtigt wird.

Diese Aufgabe ist durch die kennzeichnenden Merkmale des Patentanspruchs 1 gelöst.

Zu diesem Zweck ist in einem Endbereich einer Verarbeitungseinrichtung eine Vorrichtung vorgesehen, welche die die Verarbeitungseinrichtung verlassende Matte von dieser trennt. Damit wird in vorteilhafter Weise erreicht, daß die Matte in Fahrtrichtung hinter der Erntemaschine abgelegt wird und nicht an der Verarbeitungseinrichtung haftet. Damit ist ein störungsfreier Betrieb der Erntemaschine gewährleistet.

Die Verarbeitungseinrichtung ist eine Preßeinrichtung, die in an sich bekannter Weise zumindest aus wenigstens zwei einander zugeordneten Preßrollen besteht, wobei in Förderrichtung der Matte parallel hinter einer Preßrolle die als Walze ausgebildete Vorrichtung zur Trennung angeordnet ist. Aufgrund dieser Anordnung wird der Vorteil erzielt, daß die von der Preßeinrichtung gepreßte Matte einfach von den Preßrollen getrennt wird und abgelegt werden kann. Damit wird vermieden, daß aufgrund des hohen Preßdruckes die Matte an den Preßrollen haften bleibt.

In Weiterbildung der Erfindung weist die Vorrichtung (Walze) eine die Trennung begünstigende Oberflächenstruktur auf. Durch diese Oberflächenstruktur (beispielsweise Profilierung, bürstenartige Ausgestaltung) ist eine optimale Trennung gewährleistet.

In einer besonderen Ausgestaltung der Erfindung ist die Oberflächenstruktur durch parallel zur Längsachse der Walze angeordnete Stege gebildet. Aufgrund dieser Ausbildung ist ein besonders effizienter Trennvorgang gewährleistet, da die Stege, die im wesentlichen über die gesamte Breite der Walze, wobei diese der Breite der einer Preßrolle entspricht, angeordnet sind, die Matte von der Preßeinrichtung abstreifen.

In einer weiteren Ausgestaltung der Erfindung sind die Stege zumindest teilweise elastisch verformbar ausgebildet. Besteht die Preßeinrichtung aus einander zugeordneten Preßrollen, wobei um wenigstens zwei Preßrollen längs der Förderrichtung der Matte ein umlaufendes Band angeordnet ist, hat die zumindest teilweise elastisch verformbare Ausbildung der Stege den Vorteil, daß sich die Stege aufgrund der Verformung der Außenkontur der Preßeinrichtung (insbesondere des Bandes) anpassen können. Dadurch kann der Spalt zwischen der Preßeinrichtung (Preßrolle bzw.Band) und den Stegen minimiert werden, so daß eine optimale Abstreifung erfolgt. Darüberhinaus hat die elastische Verformbarkeit den Vorteil, daß eine Nahtstelle des Bandes den Betrieb der Erntemaschine nicht beeinträchtigt.

In Weiterbildung der Erfindung ist die Walze parallel zu einer Preßrolle bewegbar (verschwenkbar) angeordnet. Dies ist zum einen dadurch zu realisieren, daß die Walze auf einer Kreisbahn um den Mittelpunkt einer Preßrolle verschwenkt wird. Zum anderen ist es denkbar, daß die Walze auf einer elipsenartigen Bahn um den Mittelpunkt einer Preßrolle verschwenkt wird. Aufgrund beider Verschwenkmöglichkeiten sind optimale Einstellungsmöglichkeiten (hinsichtlich der Lage der Walze bezüglich einer Preßrolle und hinsichtlich des Abstandes zwischen der Walze und der Preßrolle) gegeben.

In Weiterbildung der Erfindung ist die Walze kraftbeaufschlagt gelagert. Durch eine beispielsweise gegen eine Kraft einer Feder gelagerte Walze ist ein Sicherheitsfaktor (beispielsweise im Falle einer Verstopfung) gegeben.

In Weiterbildung der Erfindung weist die Walze einen eigenständigen Antrieb auf oder wird durch eine Verbindung mit der Preßeinrichtung bzw. mit einer Preßrolle angetrieben. Bei dem eigenständigen Antrieb kann es sich beispielsweise um einen Elektromotor oder um einen Hydraulikantrieb handeln. Diese Verwendung der beiden beispielhaft genannten Komponenten hat den Vorteil, daß die Drehzahl der Walze beliebig einstellbar ist. Unter einem eigenständigen Antrieb ist auch ein solcher zu verstehen, wenn die Walze (insbesondere unter Zwischenschaltung von einem Getriebe, einem Vorgelege oder einer ähnlichen Untersetzung) von einer Hauptantriebsquelle der Erntemaschine (beispielsweise Verbrennungsmotor oder Hydraulikmotor) angetrieben wird. Beim Antrieb der Walze durch Verbindung mit einer Preßrolle kommen für die Verbindung Riemen-, Ketten-, Zahnrad- oder Gelenkwellenverbindungen zum Einsatz.

In einer weiteren Ausgestaltung der Erfindung dreht sich die Walze mit der gleichen Umfangsgeschwindigkeit wie eine Preßrolle. Dies hat den Vorteil, daß ein optimaler Abstreifvorang gewährleistet ist.

Weitere Ausgestaltungen, insbesondere konstruktive Ausgestaltungen, der erfindungsgemäßen Vorrichtung sind im folgenden beschrieben und in den Figuren gezeigt.
Es zeigen:
- Fig. 1: eine Erntemaschine, die mit einer erfindungsgemäßen Vorrichtung ausgerüstet ist,
- Fig. 2: eine weitere Erntemaschine, die mit einer erfindungsgemäßen Vorrichtung ausgerüstet ist,
- Fig. 3: konstruktive Gestaltungen einer Rolle,
- Fig. 4: Anordnung einer verschwenkbaren Rolle.

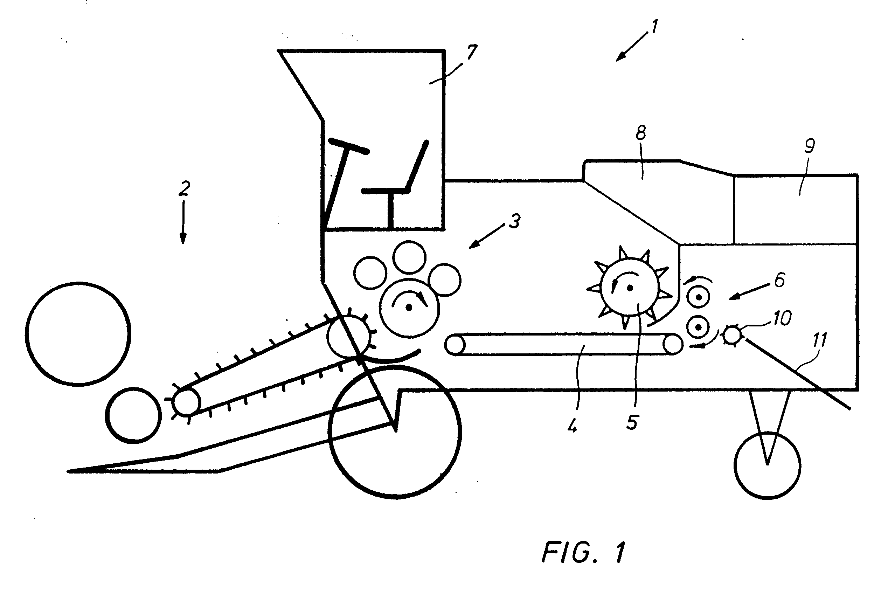

Figur 1 zeigt eine Erntemaschine, die mit einer erfindungsgemäßen Vorrichtung ausgerüstet ist. Eine selbstfahrende (oder gezogene) Erntemaschine 1 ist mit Schneid- und Fördereinrichtungen 2 sowie einer Aufbereitungseinrichtung 3 ausgestattet. Über ein Förderband 4 gelangt das aufbereitete Erntegut zu einer Dosierwalze 5, von wo aus eine Preßeinrichtung 6 beschickt wird. Darüberhinaus besteht die Erntemaschine 1 aus einer Fahrerkabine 7 sowie einem aus einem Kraftstofftank 8 versorgten Dieselmotor 9. Wie in Fig. 1 gezeigt ist, ist in einem Endbereich einer Verarbeitungseinrichtung (Preßeinrichtung 6) eine als Walze 10 ausgebildete Vorrichtung vorgesehen, welche die die Verarbeitungseinrichtung verlassende Matte von dieser trennt. Die Drehrichtung der Walze 10 und der der Walze 10 zugeordnete Preßrolle der Preßeinrichtung 6 ist gleich. Hinter der Walze 10 ist ein Ablageblech 11 vorgesehen, über welches die aufbereitete und gepreßte Matte am hinteren Ende der Erntemaschine 1 (in Fahrtrichtung betrachtet) abgelegt wird.

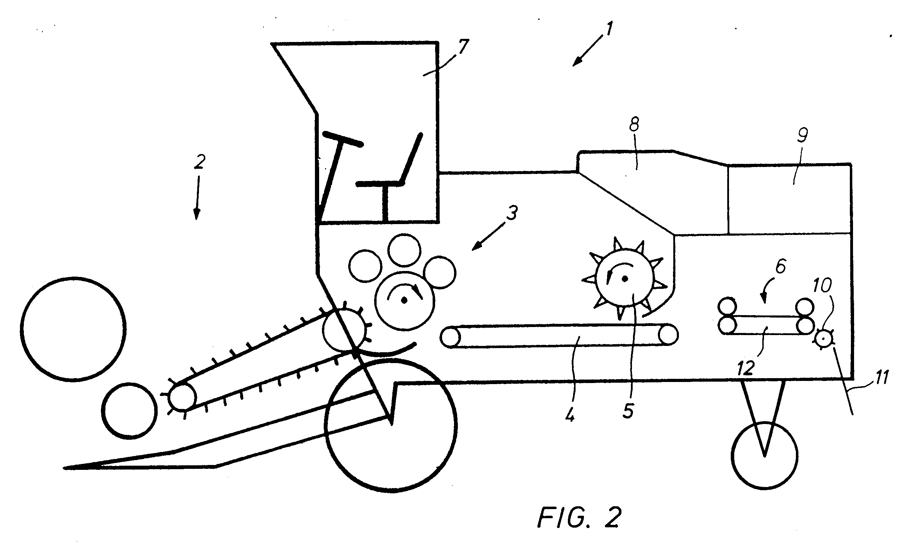

Figur 2 zeigt eine weitere Erntemaschine, die mit einer erfindungsgemäßen Vorrichtung ausgerüstet. Neben den in Fig. 1 gezeigten und beschriebenen Komponenten der Erntemaschine 1 ist in dieser Figur gezeigt, daß die Preßeinrichtung 6 aus mehreren einander zugeordneten Preßrollen besteht, wobei um wenigstens zwei Preßrollen ein umlaufendes Band 12 angeordnet ist. Die Walze 10 ist wiederum der in Förderrichtung betrachteten letzten Preßrolle zugeordnet, um die das Band 12 läuft. Hinter der Walze 10 erfolgt wieder die Ablage der Matte mittels des Ablagebleches 11.

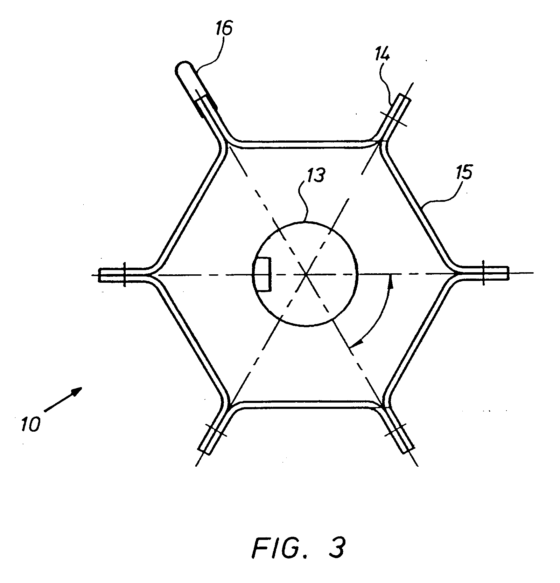

Figur 3 zeigt die konstruktive Gestaltung der Walze 10. Die Walze 10 besteht aus um eine Längsachse 13 angeordnete und Stege 14 bildende Blechteilen 15. Zur Erreichung eines engen Spaltes zwischen einer Preßrolle (bzw. dem Band 12) der Preßeinrichtung 6 und den Stegen 14 ist es denkbar und in Fig. 3 gezeigt, die Stege 14 zumindest teilweise elastisch verformbar auszubilden. Dies kann beispielsweise durch einen elastisch verformbaren Aufsatz 16 erfolgen. Weiterhin denkbar ist es, den Aufsatz 16 zwischen den Stegen 14 anzuordnen.

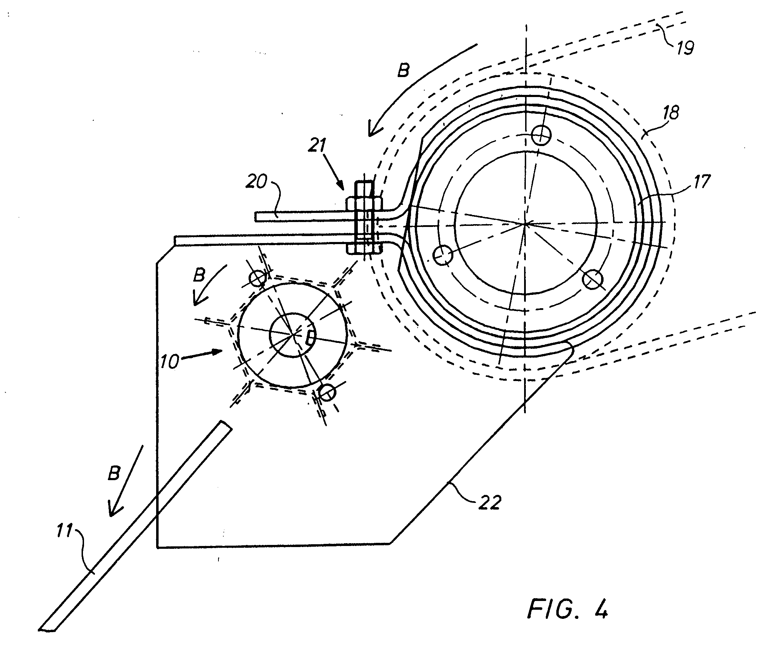

Figur 4 zeigt eine Anordnung einer verschwenkbaren Walze 10. Eine Preßrolle 17 der Preßeinrichtung 6 ist mit einer Beschichtung 18 (inbesondere elastisch verformbar) versehen. Um diese Preßrolle 17 und zumindest eine weitere andere (nicht gezeigte) Preßrolle läuft ein Band 19 (beziehungsweise Band 12). Mit einem Klemmstück 20, das mit einer Schraubverbindung 21 fixierbar ist, ist die in einem Befestigungsteil 22 gelagerte Walze 10 um die Achse der Preßrolle 17 herum verschwenkbar. Damit ist es möglich, die Lage der Walze 10 zu der Preßrolle 17 zu verändern und eine für den Abstreifvorgang erforderliche Lage optimal einzustellen. Mit B ist die Förderrichtung der Matte bezeichnet. Zur Gewährleistung des optimalen Abstreifvorganges haben die Preßrolle 17 und die Walze 10 gleiche Umfangsgeschwindigkeiten und den gleichen Drehsinn. Der Antrieb der Walze 10 (mittels Zahnriemen, Kette, Zahnrad oder eigenständiger Antrieb) ist nicht gezeigt, aber vorhanden. Darüber hinaus ist es denkbar, die Walze hinter jeder Verarbeitungseinrichtung (zum Beispiel auch hinter der Aufbereitungseinrichtung) anzuordnen. Unter dem bisher verwendeten Begriff "trennen" ist zu verstehen, daß die Walze 10 die aus der Verarbeitungseinrichtung austretende Matte von dieser loslöst bzw. abhebt.

## Patentansprüche

1. Erntemaschine zur Grünfutteraufbereitung, die zur Durchführung eines Aufbereitungsprozesses für Grünfutter wenigstens Schneid-, Förder- sowie Verarbeitungseinrichtungen zur Bildung einer Matte aus Grünfutter aufweist, wobei eine Verarbeitungseinrichtung eine Preßeinrichtung ist, die zumindest aus wenigstens zwei einander zugeordneten Preßrollen besteht und am Ende der Preßeinrichtung die Matte austritt,
*dadurch gekennzeichnet,* daß in einem Endbereich der Preßeinrichtung eine Vorrichtung vorgesehen ist, welche die die Preßeinrichtung verlassende Matte von dieser trennt und in Förderrichtung der Matte parallel hinter einer Preßrolle angeordnet ist.

2. Erntemaschine nach Anspruch 1, dadurch gekennzeichnet, daß die Vorrichtung als Walze (10) ausgebildet ist.

3. Erntemaschine nach Anspruch 1 oder 2,
*dadurch gekennzeichnet*, daß die Vorrichtung bzw. Walze eine die Trennung begünstigende Oberflächenstruktur aufweist.

4. Erntemaschine nach Ansprüchen 2 und 3,
*dadurch gekennzeichnet*, daß die Oberflächenstruktur durch parallel zur Längsachse der Walze angeordnete Stege gebildet ist.

5. Erntemaschine nach Anspruch 4,
*dadurch gekennzeichnet*, daß die Stege zumindest teilweise elastisch verformbar ausgebildet sind.

6. Erntemaschine nach einem der Ansprüche 2-5,
*dadurch gekennzeichnet*, daß die Walze parallel zu der Preßeinrichtung (bzw. zu einer Preßrolle) bewegbar (verschwenkbar) ist.

7. Erntemaschine nach einem der Ansprüche 2-6,
*dadurch gekennzeichnet*, daß die Walze kraftbeaufschlagt gelagert ist.

8. Erntemaschine nach einem der Ansprüche 2-7,
*dadurch gekennzeichnet*, daß die Walze einen eigenständigen Antrieb aufweist.

9. Erntemaschine nach einem der Ansprüche 2-8,
*dadurch gekennzeichnet*, daß die Walze durch Verbindung mit der Preßeinrichtung (bzw. mit einer Preßrolle) angetrieben wird.

10. Erntemaschine nach einem der Ansprüche 2-9,
*dadurch gekennzeichnet*, daß die Walze sich mit der gleichen Umfangsgeschwindigkeit dreht wie eine Preßrolle.

## Claims

1. A harvester for the processing of green crop, which for carrying out the processing of the green crop is provided with at least cutting, conveying and processing devices for the formation of a mat of green crop, wherein one processing device is a pressing device which comprises at least two pressure rollers assigned to one another and the mat leaves the end of the pressing device,
*characterised in that* a device is provided in one end region of the pressing device which separates the mat leaving the pressing device from it and is arranged in the direction of travel of the mat parallel behind a pressure roller.

2. A harvester according to claim 1, *characterised in that* the device is in the form of a roller (10).

3. A harvester according to claim 1 or claim 2,
*characterised in that* the device or roller has a surface structure which favours the separation.

4. A harvester according to claims 2 and 3,
*characterised in that* the surface structure is formed through webs arranged parallel to the longitudinal axis of the roller.

5. A harvester according to claim 4,
*characterised in that* the webs are at least in part elastically deformable.

6. A harvester according to any one of claims 2 to 5,
*characterised in that* the roller can be moved parallel to the pressing device (or to a pressure roller), i.e. it can be swivelled.

7. A harvester according to any one of claims 2 to 6,
*characterised in that* the roller is mounted so that a force acts on it.

8. A harvester according to any one of claims 2 to 7,
*characterised in that* the roller has its own drive.

9. A harvester according to any one of claims 2 to 8,
*characterised in that* the roller is driven through connection with the pressing device (or with a pressure roller).

10. A harvester according to any one of claims 2 to 9,
*characterised in that* the roller rotates with the same circumferential speed as a pressure roller.

## Revendications

1. Moissonneuse pour la préparation de fourrage vert qui comporte au moins une installation de coupe, une installation de transfert et des installations de traitement pour effectuer les opérations de traitement du fourrage vert et former une nappe de fourrage vert, l'installation de traitement étant une installation de compression composée d'au moins deux rouleaux de compression associés, la nappe sortant de l'extrémité de l'installation de compression,
caractérisée en ce que
dans une zone d'extrémité de l'installation de compression, et parallèlement derrière un rouleau de compression dans le sens de circulation de la nappe il est prévu un dispositif qui sépare la nappe quittant l'installation de compression.

2. Moissonneuse selon la revendication 1,
caractérisée en ce que
le dispositif est en forme de cylindre (10).

3. Moissonneuse selon la revendication 1 ou 2,
caractérisée en ce que
le dispositif ou le cylindre présente une structure de surface favorisant la séparation.

4. Moissonneuse selon la revendication 2 ou 3,
caractérisée en ce que
la structure de la surface est formée par des nervures parallèles à l'axe longitudinal du cylindre.

5. Moissonneuse selon la revendication 4,
caractérisée en ce que
les nervures sont au moins partiellement déformables élastiquement.

6. Moissonneuse selon l'une des revendications 2 à 5,
caractérisée en ce que
les cylindres sont mobiles parallèlement à l'installation de compression (voir un rouleau de compression) (mobilité par basculement).

7. Moissonneuse selon l'une des revendications 2 à 6,
caractérisée en ce que
le cylindre est sollicité par une force.

8. Moissonneuse selon l'une des revendications 2 à 7,
caractérisée en ce que
le cylindre comporte son propre moyen d'entraînement.

9. Moissonneuse selon l'une des revendications 2 à 8,
caractérisée en ce que
le cylindre est entraîné par une liaison avec l'installation de compression (ou avec un rouleau de compression).

10. Moissonneuse selon l'une des revendications 2 à 9,
caractérisée en ce que
le cylindre tourne à la même vitesse périphérique qu'un rouleau de compression.
